# EUROPEAN PATENT APPLICATION

(11) **EP 1 826 161 A2**
(43) Date of publication of application: **29.08.2007**
(21) Application number: 07102843.5
(22) Date of filing: 21.02.2007
(51) Int. Cl.: B65G 47/91, B65G 49/06

(54) **Pickup member for handling crude ceramic products**

(30) Priority: 22.02.2006 IT TO20060124
(71) Applicant: FAMATEC S.p.A., 38012 Taio (IT)
(72) Inventor: Pancheri, Italo, 38020 Livo (IT)
(74) Representative: Jorio, Paolo

(57) **Abstract**

A pickup member (1) for handling crude ceramic products, and having a supporting frame (2) fixed to a lifting and handling device (3), and a flat grip plate (4) fixed to and projecting from the supporting frame (2) so as to position a first face of the flat grip plate against the crude ceramic product for handling; the first face of the flat grip plate (4) having at least one central ventilation opening (4a) allowing airflow through the surface of the first face, and being covered with a cover layer (5) of closed-cell foam of a plastic material with elastoplastic properties; the pickup member (1) also having an air intake pump (6), which is connected at the intake (6a) to the ventilation opening (4a) in the flat grip plate (4), and provides, on command, for drawing air through the first face of the flat grip plate (4).

## Description

The present invention relates to a pickup member for handling crude ceramic products.

More specifically, the present invention relates to a pickup member for safely handling sinks and shower stands of crude, i.e. soft, unfired, ceramic, to which the following description refers purely by way of example.

As is known, prior to firing in a kiln, ceramic sinks and shower stands must be handled with extreme care, owing to the ease with which the crude, soft ceramic deforms.

The poor strength of crude ceramic products has obviously led the makers of ceramic sink and shower stand manufacturing systems to devise highly complicated machines designed to delicately remove the crude ceramic sinks or shower stands off the molding press, and deposit them onto storage trucks by which they are later loaded into kilns to complete the manufacturing process.

Unfortunately, known machines are extremely expensive, not very versatile, and are partly responsible for reducing the overall output of the system : a large percentage of rejects, in fact, is produced when transferring the crude ceramic sinks and shower stands from the press to the kiln.

It is an object of the present invention to provide a pickup member designed to simplify the handling of crude, i.e. soft, ceramic sinks and shower stands.

According to the present invention, there is provided a pickup member for handling crude ceramic products, as claimed in Claim 1 and preferably, though not necessarily, in any one of the dependent Claims.

A non-limiting embodiment of the present invention will be described by way of example with reference to the accompanying drawings, in which:
Figure 1 shows a partly sectioned view in perspective, with parts removed for clarity, of a pickup member for handling crude ceramic products in accordance with the teachings of the present invention;
Figure 2 shows a view in perspective, from a different angle, of a detail of the Figure 1 pickup member.

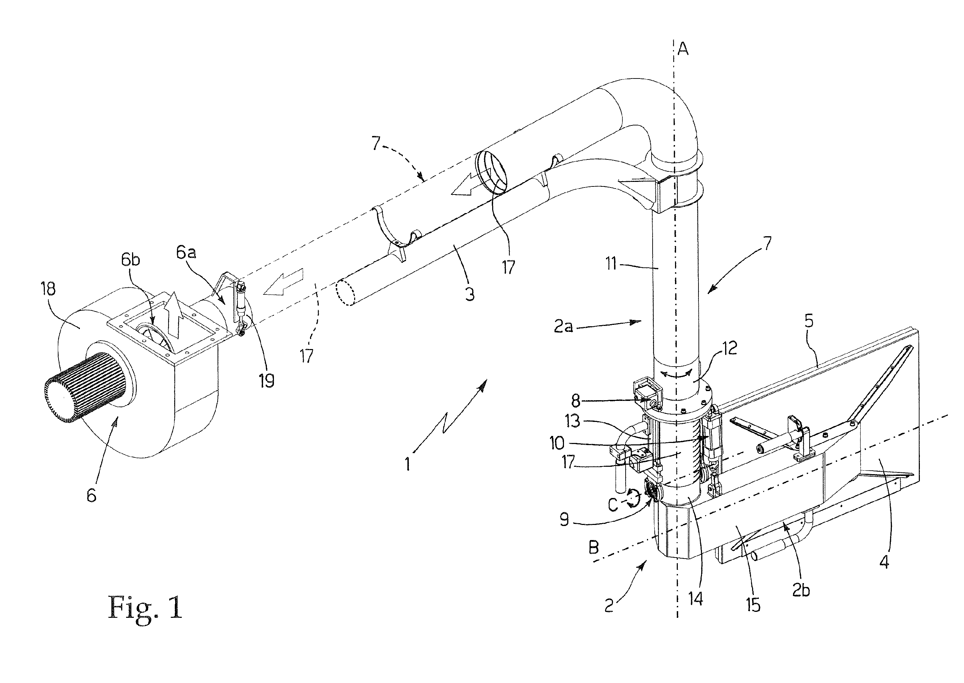

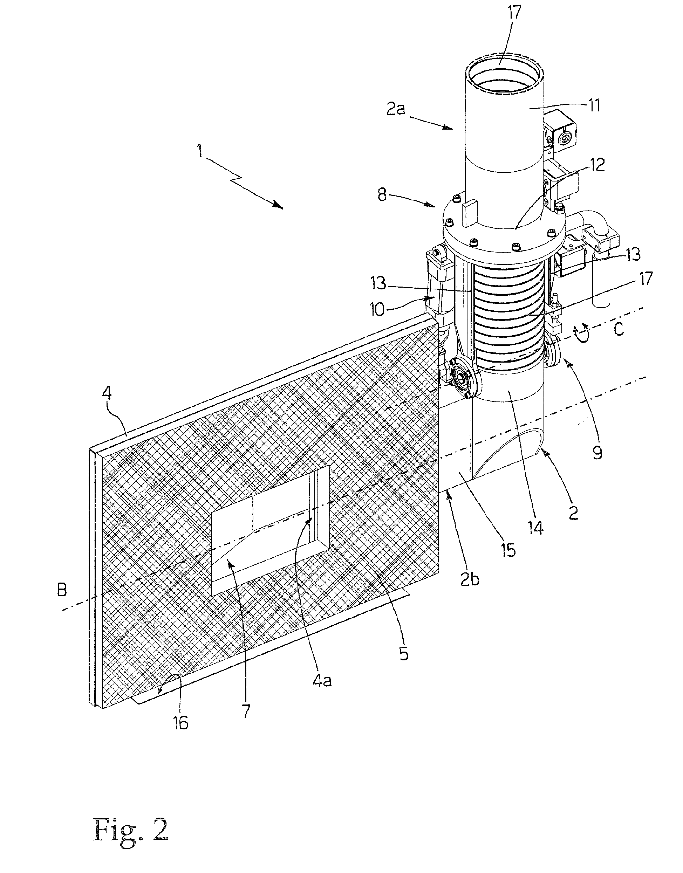

Number 1 in Figures 1 and 2 indicates as a whole a pickup member for handling crude, i.e. unfired, ceramic products, and which may be used to particular advantage for handling crude ceramic sinks and/or shower stands.

Pickup member 1 substantially comprises a supporting frame 2 fixed to the movable arm 3 of a generic pneumatic manipulator or other type of lifting and handling device, and a flat grip plate 4 fixed to and projecting from supporting frame 2, so that one of the two faces of the grip plate - hereinafter referred to as the front face - can be positioned resting against the crude ceramic product for handling.

With reference to Figure 2, the front face of flat grip plate 4, designed to contact the crude ceramic product for handling, has at least one central ventilation slot or opening 4a to allow airflow through the surface of the front face, and is covered with a closed-cell foam rubber mat or cover layer 5, which adapts elastoplastically to the outline of the crude ceramic product to be retained. Cover layer 5 is preferably, though not necessarily, 2 to 15 cm (centimetres) thick and, by way of an alternative to closed-cell foam rubber, may be made of closed-cell neoprene or polyurethane foam, or closed-cell foam of any other plastic material with elastoplastic properties.

Pickup member 1 also comprises a preferably, though not necessarily, electric air intake pump 6; and a connecting pipe 7 connecting the intake 6a of pump 6 directly to ventilation opening 4a in flat grip plate 4, so that the airflow generated by pump 6 flows entirely through ventilation opening 4a.

More specifically, air intake pump 6 is capable of producing and maintaining an airflow of 15,000 m³/h (cubic metres an hour) or more, with a pressure difference or head of 0.010 to 0.050 bar, and the outlet 6b is preferably, though not necessarily, connected directly to the outside.

With reference to Figure 1, in the example shown, supporting frame 2 is substantially L-shaped, and hangs from the end of movable arm 3 of the pneumatic manipulator so that a first arm 2a of the frame projects from the end of articulated arm 3 and is parallel to a substantially vertical axis A, and a second arm 2b of the frame projects from the bottom end of first arm 2a and is parallel to a substantially horizontal axis B.

Flat grip plate 4 is fixed to the end of horizontal arm 2b, so as to be substantially coplanar with the vertical plane containing axis B and preferably, though not necessarily, also axis A.

With reference to Figures 1 and 2, supporting frame 2 also comprises a first articulated joint 8 located along vertical arm 2a, and which allows arm 2b to rotate freely with respect to arm 2a about an axis parallel to and preferably, though not necessarily, coincident with axis A; and a second articulated joint 9 located along arm 2a, below articulated joint 8, and which allows arm 2b to oscillate freely and flag-like with respect to arm 2a about an axis C parallel to and preferably, though not necessarily, at a distance from axis B.

In addition, supporting frame 2 preferably, though not necessarily, also comprises an auxiliary lock device 10, which, on command, rotates arm 2b about axis C and locks it in a predetermined work position, in which flat grip plate 4 is substantially vertical.

More specifically, with reference to Figures 1 and 2, supporting frame 2 comprises a rigid tubular sleeve 11, of appropriate length, projecting from the end of movable arm 3 of the pneumatic manipulator and coaxial with axis A; a first tubular coupling 12 fitted in axially rotating manner to the bottom end of tubular sleeve 11 so as to rotate freely with respect to tubular sleeve 11 about axis A; and two supporting arms 13 projecting downwards from tubular coupling 12, on opposite sides of and parallel to axis A.

Supporting frame 2 also comprises a second tubular coupling 14 coaxial with axis A and hinged to the bottom ends of the two supporting arms 13 to rotate freely about axis C, and a horizontal box beam 15 projecting, parallel to axis B, from tubular coupling 14 so as to oscillate flag-like about axis C, beneath tubular sleeve 11.

Obviously, articulated joint 8 is defined by tubular sleeve 11 and tubular coupling 12; and articulated joint 9 is defined by the two supporting arms 13 and tubular coupling 14 hinged to the supporting arms.

As regards lock device 10, this comprises a conventional single- or double-acting pneumatic cylinder, the bottom of the outer casing of which is hinged to tubular coupling 12, and the end of the movable rod of which is hinged to horizontal box beam 15, so as to exert force, on command, on horizontal box beam 15 to rotate the beam about axis C and move flat grip plate 4 into a substantially vertical position.

With reference to Figures 1 and 2, flat grip plate 4 is preferably, though not necessarily, rectangular, and is fixed to horizontal box beam 15 so that the two major lateral edges are parallel to axes B and C, i.e. horizontal. In the example shown, ventilation slot or opening 4a in the front face of flat grip plate 4 is defined by a rectangular through hole, and flat grip plate 4 is fixed to horizontal box beam 15 by its rear face, so that ventilation slot or opening 4a communicates directly with the inside of horizontal box beam 15.

Preferably, though not necessarily, flat grip plate 4 also comprises a rigid projecting shelf or ledge 16, which projects from the bottom major lateral edge of the plate and a few centimetres beyond cover layer 5 to act as a bottom supporting member for the crude ceramic product, which is positioned contacting cover layer 5 covering the front face of the plate.

With reference to Figures 1 and 2, in the example shown, connecting pipe 7 is defined by horizontal box beam 15; and by a flexible corrugated pipe 17 of plastic material, which is connected at one end to intake 6a of pump 6, extends inside tubular sleeve 11, coaxially with axis A, projects from the bottom of tubular coupling 12, between the two supporting arms 13, and fits onto tubular coupling 14 to connect the inside of horizontal box beam 15 to intake 6a of pump 6. Horizontal box beam 15 must obviously be airtight, with only two openings, one formed at tubular coupling 14, and the other at ventilation opening 4a in flat grip plate 4.

Alternatively, corrugated pipe 17 has its first end connected to intake 6a of pump 6; extends inside tubular sleeve 11, coaxially with axis A; projects from the bottom of tubular coupling 12, between the two supporting arms 13; extends inside tubular coupling 14 and horizontal box beam 15; and has the second end connected directly to ventilation opening 4a in flat grip plate 4, directly on the rear face of the plate.

With reference to Figure 1, in the example shown, air intake pump 6 is defined by a conventional electric centrifugal fan 18 designed to guarantee an airflow of about 20,000 m³/h (cubic metres an hour) with a head of 0.015 to 0.020 bar; and by a controlled-open-close throttle valve 19 located at the intake of centrifugal fan 18 to regulate airflow along connecting pipe 7. Throttle valve 19 therefore defines intake 6a of pump 6.

Operation of pickup member 1 will now be described, assuming centrifugal fan 18 is already running, and throttle valve 19 is in the closed position closing intake 6a of pump 6 and so cutting off air intake by pump 6 along connecting pipe 7.

In actual use, the operator manually positions the front face, i.e. cover layer or mat 5, of flat grip plate 4 adjacent to the peripheral edge of the bowl of the crude ceramic sink for handling, taking care to insert projecting shelf or ledge 16 underneath the sink, and then activates pump 6 - or better sets throttle valve 19 to the fully-open position - to start drawing air from ventilation opening 4a in flat grip plate 4.

The airflow at the front face of flat grip plate 4 forces the front face of flat grip plate 4 to adhere to the crude ceramic sink, while the cover layer or mat 5 of elastically deformable material adapts locally to the shape of the sink, so that air is drawn to ventilation opening 4a solely through the other through openings always present in ceramic skins and shower stands.

Tests show that the relatively high flow rate per hour of pump 6 is capable of producing sufficient airflow to hold the crude ceramic sink on cover layer 5 on the front face of flat grip plate 4, while the relatively low (10-15 mbar) head of intake pump 6 produces no forces on the body of the crude ceramic sink capable of resulting in structural deformation, thus eliminating any risk of damage to the product.

Once the crude ceramic sink is gripped, the operator activates auxiliary lock device 10 to set flat grip plate 4 to the vertical position, and then uses the pneumatic manipulator or other lifting and handling device to lift and move the crude ceramic sink from one place to another, while the whole weight of the sink is supported by projecting shelf or ledge 16 of flat grip plate 4.

The advantages of pickup member 1 are obvious. In addition to rapidly gripping and retaining a crude ceramic product safely, with no structural deformation of the product, pickup member 1 is also highly versatile, by adapting instantly to the shape of the peripheral edge of the bowl of the crude ceramic product for handling, whatever that may be.

Moreover, the component parts of pickup member 1 are of straightforward design, of proven reliability, and easily available at low cost, so that low-cost conventional pneumatic manipulators can safely be used for handling crude ceramic products coming off the molding press.

Clearly, changes may be made to pickup member 1 for handling crude ceramic products as described and illustrated herein without, however, departing from the scope of the present invention.

## Claims

1. A pickup member (1) for handling crude ceramic products, **characterized by** comprising a supporting frame (2) fixed to a lifting and handling device (3), and a flat grip plate (4) fixed to and projecting from the supporting frame (2) so as to position a first face of the flat grip plate against the crude ceramic product for handling; said first face of the flat grip plate (4) having at least one central ventilation opening (4a) allowing airflow through the surface of the first face, and being covered with a cover layer (5) of closed-cell foam of a plastic material with elastoplastic properties; said pickup member (1) also comprising an air intake pump (6), which is connected at the intake (6a) to the ventilation opening (4a) in said flat grip plate (4), and provides, on command, for drawing air through said first face of the flat grip plate (4).

2. A pickup member as claimed in Claim 1, **characterized in that** said flat grip plate (4) has a projecting shelf (16) projecting from a lateral edge of the flat grip plate and beyond the cover layer (5), so as to act as a bottom supporting member for the crude ceramic product, which is positioned contacting said cover layer (5).

3. A pickup member as claimed in Claim 1 or 2, **characterized in that** said supporting frame (2) is substantially L-shaped, with a first arm (2a) extending parallel to a substantially vertical first axis (A), and a second arm (2b) projecting from the bottom end of the first arm (2a) and parallel to a substantially horizontal second axis (B); said flat grip plate (4) being fixed to the end of said second arm (2b) so as to be substantially coplanar with the vertical plane containing said second axis (B).

4. A pickup member as claimed in Claim 3, **characterized in that** said supporting frame (2) comprises a first articulated joint (8) located along said first arm (2a) and designed to allow said second arm (2b) to rotate with respect to the first arm (2a) about a first axis of rotation parallel to said first axis (A).

5. A pickup member as claimed in Claim 4, **characterized in that** said first axis of rotation is coincident with said first axis (A).

6. A pickup member as claimed in Claim 4 or 5, **characterized in that** said supporting frame (2) comprises a second articulated joint (9) located along said first arm (2a), below said first articulated joint (8), and designed to allow said second arm (2b) to oscillate with respect to said first arm (2a) about a second axis of rotation (C) parallel to said second axis (B).

7. A pickup member as claimed in Claim 6, **characterized in that** said second axis of rotation (C) is at a distance from said second axis (B).

8. A pickup member as claimed in Claim 6 or 7, **characterized in that** said supporting frame (2) comprises an auxiliary lock device (10), which, on command, positions and then locks said second arm (2b) in a predetermined work position, in which the flat grip plate (4) is positioned substantially vertically.

9. A pickup member as claimed in any one of the foregoing Claims, **characterized in that** said cover layer (5) is made of closed-cell foam rubber, closed-cell polyurethane foam, or closed-cell neoprene foam.

10. A pickup member as claimed in any one of the foregoing Claims, **characterized in that** said cover layer (5) is 2 to 15 centimetres thick.

11. A pickup member as claimed in any one of the foregoing Claims, **characterized by** also comprising a connecting pipe (7) for connecting the intake (6a) of said air intake pump (6) directly to the ventilation opening (4a) in said flat grip plate (4).

12. A pickup member as claimed in any one of the foregoing Claims, **characterized in that** said air intake pump (6) is capable of producing and maintaining an airflow of 15,000 m³/h or over, with a pressure difference or head ranging between 0.010 bar and 0.050 bar.

13. A pickup member as claimed in any one of the foregoing Claims, **characterized in that** said air intake pump (6) comprises an electric centrifugal fan (18); and a controlled-open-close throttle valve (19) located at the intake of said centrifugal fan (18).

14. A pneumatic manipulator (3), **characterized by** comprising a pickup member (1) for handling crude ceramic products, as claimed in any one of Claims 1 to 13.
